# EUROPÄISCHE PATENTSCHRIFT

(11) **EP 3 111 187 B1**
(45) Veröffentlichungstag und Bekanntmachung des Hinweises auf die Patenterteilung: **04.04.2018**
(21) Anmeldenummer: 15706140.9
(22) Anmeldetag: 13.02.2015
(51) Int. Cl.: F23Q 7/00, G01L 9/00, G01L 19/06, G01L 23/22

(54) **GLÜHKERZENADAPTER**
GLOW-PLUG ADAPTER
ADAPTATEUR POUR BOUGIE À INCANDESCENCE DE PRÉCHAUFFAGE

(30) Priorität: 25.02.2014 CH 2642014
(43) Veröffentlichungstag der Anmeldung: 04.01.2017
(73) Patentinhaber: Kistler Holding AG, 8408 Winterthur (CH)
(72) Erfinder: BRUNNER, Simon, CH-8307 Effretikon (CH); BRECHBÜHL, Stefan, CH-8570 Weinfelden (CH)
(86) Internationale Anmeldenummer: PCT/CH2015/000019
(87) Internationale Veröffentlichungsnummer: WO 2015/127568

(56) Entgegenhaltungen:
- EP-A2- 1 111 360
- EP-A2- 2 023 113
- US-A1- 2004 237 629

## Beschreibung

### Technisches Gebiet

Die Erfindung betrifft einen Glühkerzenadapter zur Druckmessung in einem Brennraum eines Verbrennungsmotors, umfassend einen Adapterkopf, in welchem ein Drucksensor mit einer Membran gelagert ist und eine Adapterhülse, die am Adapterkopf befestigt ist, wobei der Glühkerzenadapter eine Dichtschulter aufweisend druckdicht in eine Glühkerzenbohrung in einer Brennraumwand einschraubbar ist und Signalleitungen vom Drucksensor durch die Adapterhülse aus dem Glühkerzenadapter herausgeführt sind. Die Erfindung betrifft auch einen Glühkerzenadapter, welcher druckdicht in einer Glühkerzenbohrung in der Brennraumwand angeordnet ist.

### Stand der Technik

Adapter zum Anbringen von Druckmesssonden an Verbrennungsmotoren werden als Zünd- oder Glühkerzenadapter hergestellt und vertrieben, wobei die Geometrie des Glühkerzenadapters in der Regel einer Glühkerze entspricht. Um den Glühkerzenadapter an die geforderte Geometrie anzupassen, weisen aus dem Stand der Technik bekannte Glühkerzenadapter Adapterspitzen auf, wie bei Glühkerzen bekannt.

In der DE 102011088474 wird ein Glühkerzenadapter beschrieben, welcher eine metallische oder keramische Adapterspitze aufweist, die einem piezoelektrischen Drucksensor brennraumseitig vorgelagert ist. Der auf den Glühstift wirkende Druck wird auf den Drucksensor übertragen und dadurch gemessen.

Eine ähnliche Konstruktion ist in der WO 2009/146565 beschrieben. In Längsrichtung auf eine Adapterspitze des Glühkerzenadapters wirkende Kräfte bzw. Drücke werden auf eine Membran eines piezoelektrischen Sensors übertragen und gemessen. Die Adapterspitze ist entsprechend bewegbar gelagert und wirkt jeweils als druckaufnehmendes Element, sodass Kräfte indirekt über die Adapterspitze auf die Membran des piezoelektrischen Sensors übertragen werden. Die erreichbare Messgenauigkeit dieser Anordnungen ist aufgrund der indirekten Kraftübertragung nicht optimal.

Eine andere Konstruktion ist im Glühkerzenadapter gemäss der DE 20301021 beschrieben. Auch dieser Glühkerzenadapter ist in einer Glühkerzenbohrung in einer Brennraumwand anstelle einer Glühkerze befestigbar. Der Glühkerzenadapter weist einen Adapterkopf auf, welcher im Wesentlichen zylindrisch ausgestaltet ist, einen Dichtkonus aufweist und einen Dichtsitz bildend in der Glühkerzenbohrung befestigbar ist. Der Drucksensor ist als ungekühlter Hochtemperatur-Drucksensor ausgeführt, umfassend eine bewegbare Membran auf welche der Gasdruck des Brennraumes direkt wirkt. Die Membran ist möglichst nahe an den Brennraum heran gebracht, wodurch die Messgenauigkeit gesteigert ist.

Der Adapterkopf des Glühkerzenadapters weist eine daran befestigte Adapterspitze auf, zur möglichst genauen Nachbildung der Spitze einer Glühkerze. Die Adapterspitze ist entsprechend der Kontur der Spitze der Glühkerze nachempfunden und am brennraumseitigen Ende des Glühkerzenadapters am Adapterkopf stoffschlüssig unlösbar befestigt. Als Adapterspitze wird eine starre Vorrichtung verstanden, die am brennraumseitigen Ende am Adapterkopf befestigt ist und dem Drucksensor brennraumseitig vorgelagert ist. Die Adapterspitze ragt im montierten Zustand in den Brennraum hinein, analog zur Anordnung einer Glühkerze. In der Adapterspitze sind mehrere Gaswechselkanäle vorgesehen, die in eine Kavität vor der Membran des Drucksensors führen. Da in den schmalen Glühkerzenbohrungen nur ein enger Spalt zwischen der Adapterspitze und der Brennraumwand verbleibt, wird der brennraumseitige Wärmezufluss eingeschränkt.

Je nachdem, wie weit die Adapterspitze in den Brennraum hineinragt, entstehen an der Druckmesssonde des Adapters hohe Temperaturen und grosse Temperaturgefälle, welche sowohl die Messgenauigkeit als auch die Lebensdauer des Drucksensors negativ beeinflussen. Durch die thermische Konvektion um den Körper der Adapterspitze und im grossen Spalt zwischen der Adapterspitze und der Innenwand der Glühkerzenbohrung resultiert ein starkes Aufheizen der Adapterspitze. Um ein zu starkes Aufheizen zu verhindern wurde versucht, den Spalt möglichst klein zu gestalten.

Weitere relevante Drucksensoren sind aus EP 1111360 A2, US 20040237629 A1 und EP 2023113 A2 bekannt.

### Darstellung der Erfindung

Aufgabe der vorliegenden Erfindung, gelöst durch Anspruch 1, ist es, einen eingangs beschriebenen Glühkerzenadapter zur Druckmessung im Brennraum von Verbrennungsmotoren, insbesondere von Dieselmotoren zu beschreiben, der eine höhere Messgenauigkeit erzielt, bei höherer Lebensdauer eines darin angeordneten Drucksensors.

Wie aus dem Stand der Technik hervorgeht, wurde davon ausgegangen, dass ein Glühkerzenadapter eine Adapterspitze aufzuweisen hat, um die Gasströmung innerhalb des Brennraumes bei der Druckmessung möglichst gleich zu lassen, wie wenn eine Glühkerze original eingesetzt wäre. Dies hat sich überraschenderweise als unnötig herausgestellt. Durch Weglassen einer Adapterspitze kann der Drucksensor näher an den Brennraum gebracht werden, womit die Druckmessung genauer wird. Wie Messungen gezeigt haben, wird die thermische Belastung beim Weglassung der Adapterspitze überraschenderweise nicht erhöht. Dank der Verkürzung des Adapterkopfes kann der Glühkerzenadapter vollständig in der Bohrung der Brennraumwandung montiert werden, ohne in den Brennraum vorzustehen. Dies ermöglicht zudem Messungen mit verringerten thermischen Problenem.

Bei Verwendung von hochtemperaturstabilen Drucksensoren werden die Glühkerzenadapter somit einfacher in der Konstruktion. Sie werden thermisch nicht höher belastet, liefern verbesserte Druckmessungen und sind einfacher und kostengünstiger herstellbar.

### Kurze Beschreibung der Zeichnung

Im Folgenden wird die Erfindung unter Bezug der Zeichnungen näher erklärt. Es zeigen
- Figur 1: einen Glühkerzenadapter gemäss Stand der Technik mit Adapterspitze am Adapterkopf;
- Figur 2a: eine Schnittansicht eines erfindungsgemässen Adapterspitzenfreien Glühkerzenadapters;
- Figur 2b: eine Detailansicht eines Schnittes durch einen Teil des Adapterkopfes des Glühkerzenadapters gemäss Figur 2a;
- Figur 3: einen Teilschnitt eines erfindungsgemässen Adapterspitzenfreien Glühkerzenadapters, eingeführt und befestigt in einer Glühkerzenbohrung einer Brennraumwand.

### Wege zur Ausführung der Erfindung

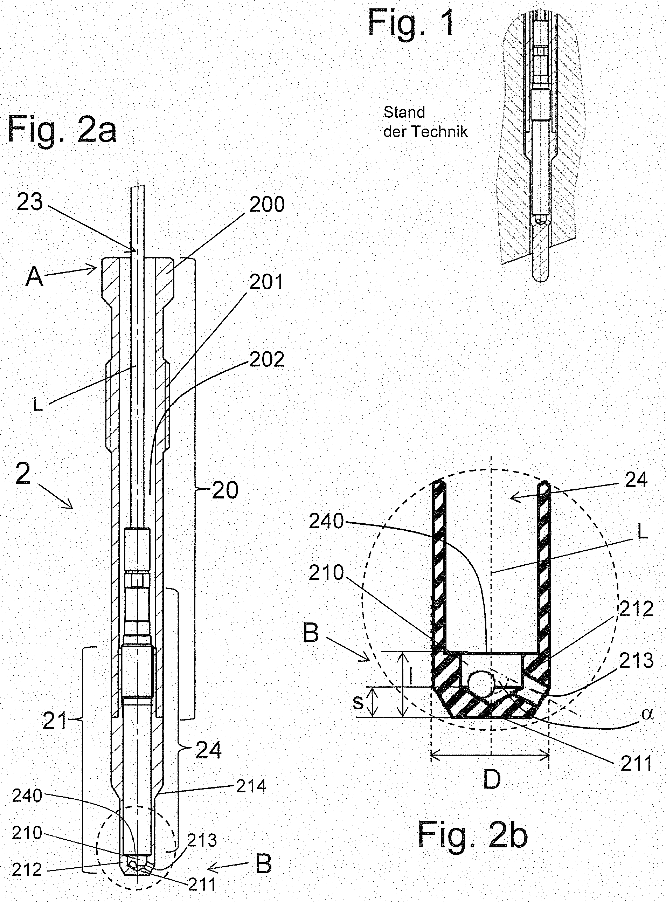

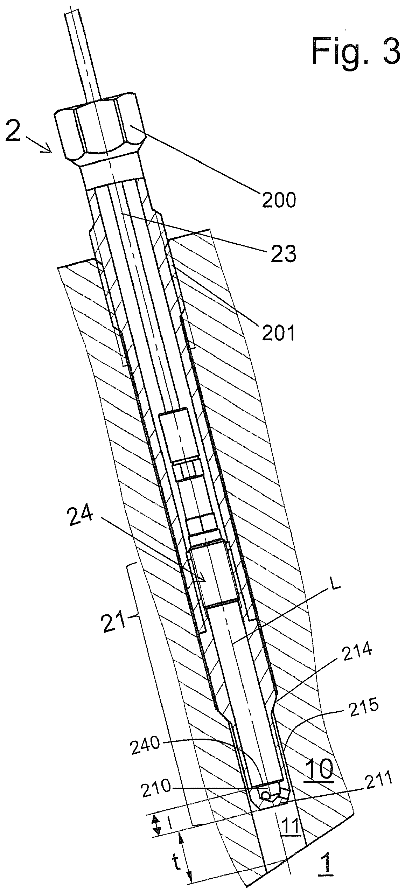

Ein erfindungsgemässer Glühkerzenadapter 2 wird in Figur 2a in Alleinstellung in einer Schnittansicht gezeigt. Die gesamte Kontur des Glühkerzenadapters 2, abgesehen von deren Spitze, ist einer Glühkerze nachgebildet. Der Glühkerzenadapter 2 umfasst eine Adapterhülse 20 und einen Adapterkopf 21, wobei der Adapterkopf 21 mit der Adapterhülse 20 verschweisst ist. Adapterkopf 21 und Adapterhülse 20 können aber auch verschraubt, verpresst oder verklebt sein. Der Glühkerzenadapter 2 verläuft von einem brennraumfernen Ende A bis zu einem brennraumnahen Ende B entlang einer Längsachse L. Das brennraumferne Ende A weist hier die Form eines Sechskantschraubkopfes 200 auf. Im Verlauf der Adapterhülse 20 ist ein Aussengewinde 201 angeordnet. Mittels Werkzeug, welches am Sechskantschraubkopf 200 angreift, kann der Glühkerzenadapter 2 durch eine lösbare Verbindung des Aussengewindes 201 in einem wirkverbindbaren Innengewinde befestigt werden, wie dies in Fig. 3 dargestellt ist. Im Bereich des brennraumnahen Endes B des Glühkerzenadapters 2 befindet sich der Adapterkopf 21.

Durch einen Innenraum 202 der Adapterhülse 20 verlaufen Signalleitungen 23 bis zu einem Drucksensor 24. Der Drucksensor 24 ist ungekühlt ausgestaltet und weist neben weiteren Bauteilen eine Membran 240 und ein mit der Membran 240 wirkverbundenes Messelement auf, wobei das Messelement mit der Membran 240 verbunden zur Erreichung der besten Messgenauigkeit möglichst in der Nähe der Membran 240 angeordnet sein sollte. Im optimalen Fall ist das Messelement in direktem Kontakt mit der Membran 240. Der Drucksensor 24 ist üblicherweise als Zylinderdrucksensor ausgestaltet und erstreckt sich bis in einen nicht dargestellten Adapterkopfinnenraum.

Der Drucksensor 24 ragt mindestens teilweise in den Adapterkopfinnenraum des Adapterkopfes 21 hinein. Der Adapterkopf 21 ist vorzugsweise einstückig ausgestaltet, weist eine Dichtschulter 214 auf und ist in Richtung brennraumnahem Ende B und damit im brennraumseitigen Bereich des Adapterkopfes 21 verjüngt ausgestaltet. Die Seitenwände 212 des Adapterkopfes 21 sind im brennraumseitigen Bereich des Adapterkopfes 21 vorzugsweise kegelstumpfförmig ausgestaltet, wobei der hohle Innenraum des Adapterkopfes 21 mit einer Stirnwand 211 abgeschlossen ist. Die Stirnwand 211 ist in einer Ebene senkrecht zur Längsachse L plan ausgeführt. Im Innenraum des Adapterkopfes 21 ist eine Kavität 210 eingeformt. Die Kavität 210 wird am brennraumnahen Ende B von der Stirnwand 211 und Richtung Adapterkopfinnenraum von der Membran 240 des Drucksensors 24 abgeschlossen.

Der Adapterkopf 21 weist ein Innengewinde auf, welches mit einem Aussengewinde des Sensors 24 wirkverbindbar ist. Der Adapterkopf 21 wird stoffschlüssig unlösbar mit der Adapterhülse 20 verbunden.

In der Detailansicht des brennraumnahen Endes B des Glühkerzenadapters 2 bzw. des Adapterkopfes 21 gemäss Figur 2b sind die Merkmale des Adapterkopfes 21 hervorgehoben. In die Seitenwände 212 bis in die Kavität 210 querend sind mehrere Gaswechselkanäle 213 eingelassen, welche hier in einem Winkel α zwischen 30° und 90°, bevorzugt von etwa 60° zur Längsachse L verlaufen. Hier sind drei Gaswechselkanäle 213 vorgesehen, die bis in die Kavität 210 führen. Die Stirnwanddicke s ist kleiner gleich 3 mm ausgeführt. Damit weist der Adapterkopf 21 an seiner Spitze nur eine geringe Oberfläche auf, welche nur einen geringen Wärmeeintrag liefert. Es ist insbesondere keine Adapterspitze angeformt oder unlösbar am Adapterkopf 21 befestigt, welche erstaunlicherweise gemäss vorliegender Erfindung als unnötig erkannt wurde.

Die Fronthöhe l zwischen der durch die Membran 240 abgeschlossenen Fläche bis zur Aussenfläche der Stirnwand 211 ist kleiner als ein Adapterdurchmesser D des Adapterkopfes 21 im Bereich der Kavität 210.

Der Glühkerzenadapter 2 wird an Stelle einer Glühkerze in eine Glühkerzenbohrung 11 in einer Brennraumwand 10 eines Brennraumes 1 einer Brennkraftmaschine, beispielsweise eines Dieselmotors, eingebracht. Dazu wird das brennraumnahe Ende B des Glühkerzenadapters 2 in die Glühkerzenbohrung 11 soweit eingeführt, dass der Adapterkopf 21 vollständig in der Glühkerzenbohrung 11 zu liegen kommt. Die Glühkerzenbohrung 11 ist derart gestaltet, dass eine Verjüngung des Durchmessers auf der dem Brennraum 1 zugewandten Seite angeformt ist. An dieser Verjüngung in der Glühkerzenbohrung 11 anliegend wird die Dichtschulter 214 des Adapterkopfes 21 platziert, wodurch eine gasdichte Befestigung des Glühkerzenadapters 2 in der Glühkerzenbohrung 11 erreicht wird. Das Aussengewinde 201 an der Adapterhülse 20 greift in ein Innengewinde der Glühkerzenbohrung 11 ein, das in einem vom Brennraum 1 abgewandten Abschnitt angeordnet ist. Die Adapterhülse 20 samt Adapterkopf 21 kann durch Betätigung des Sechskantschraubkopfes 200 lösbar verbindbar eingeschraubt werden. Die Signalleitungen 23 treten aus der Adapterhülse 20 ausserhalb der Glühkerzenbohrung 11 aus und können an eine Messeinrichtung angeschlossen werden.

Die Geometrie des Glühkerzenadapters 2 wird derart an die Glühkerzenbohrung 11 angepasst, dass der Adapterkopf 21 nicht in den Brennraum 1 ragt.

Das brennraumnahe Ende B des Glühkerzenadapters 2, insbesondere der Adapterkopf 21 mit der Stirnwand 211, die Kavität 210 und die Gaswechselkanäle 213, liegen beabstandet vom Brennraum 1 vollständig in der Glühkerzenbohrung 11. Der Glühkerzenadapter 2 ist damit in der Glühkerzenbohrung 11 zurückversetzt so angeordnet, dass der Adapterkopf 21 nicht in den Brennraum ragt. Der Abstand t zwischen einem zentralen Punkt in Höhe der Längsachse L auf der Aussenfläche der Stirnwand 211 und dem Ende der Glühkerzenbohrung 11 ist damit grösser gleich Null gewählt. Bevorzugt wird der Abstand t grösser Null und kleiner 10 mm gewählt, was zu besten Messergebnissen führt.

Von Vorteil ist, wenn der Spalt 215 zwischen den Seitenwänden 212 des Adapterkopfes 21 und der Innenwand der Glühkerzenbohrung 11 ein geringes Spaltmass aufweist. Bevorzugt wird der Adapterkopf 21 so geformt, dass das Spaltmass kleiner 0.05 mm beträgt.

Zum einen ist die Stirnwand 211 geschlossen ausgestaltet und der Adapterkopf 21 in der Glühkerzenbohrung 11 vom Brennraum 1 zurückversetzt. Die Verbrennungsgase können aber ohne weiteres durch die Gaswechselkanäle 213 zur Membran 240 gelangen, an welcher der aktuelle Gasdruck präzise mittels eines Messelements messbar ist. Um das Messergebnis nicht zu verfälschen, kann der Abstand t nur in einem kleinen Bereich variiert werden. Das freie Volumen in der Glühkerzenbohrung 11 vor dem Adapterkopf 21 ist gegenüber dem Stand der Technik stark vergrössert. Der Gasstrom gelangt in der Ausführungsform der erfindungsgemässen Lösung schneller resp. einfacher an die Gaswechselkanäle 213, was eine höhere Messgenauigkeit und Lebensdauer des Drucksensors 24 bewirkt.

Die im Vergleich zum Stand der Technik reduzierte Oberfläche des Adapterkopfes 21 des Glühkerzenadapters 2 führt zu einem geringeren Wärmeeintrag in den Drucksensor 24, woraus die erhöhte Lebensdauer resultiert.

Es war nicht zu erwarten, dass auf längliche Adapterspitzen verzichtet werden kann. Die Strömungseigenschaften bei Verwendung des erfindungsgemässen Glühkerzenadapters 2 sind kaum gestört und Pfeiffenschwingungen werden stark reduziert. Im Gegensatz zum Stand der Technik ist die Querschnittsfläche der Glühkerzenbohrung 11 nicht durch Zusatzbauteile verengt. Die Glühkerzenbohrung kann somit von einem grösseren Gasstrom passiert werden, was tiefere Resonanzfrequenzen mit höheren Amplituden vermeidet.

### Bezugszeichenliste

1 Brennraum
   10 Brennraumwand
   11 Glühkerzenbohrung
2 Glühkerzenadapter
   20 Adapterhülse
      200 Sechskantschraubkopf
      201 Aussengewinde
      202 Hülseninnenraum
   21 Adapterkopf
      210 Kavität
         l Fronthöhe
         D Adapterkopfdurchmesser im Bereich der Kavität
      211 Stirnwand
         s Stirnwanddicke
      212 Seitenwand
      213 Gaswechselkanal
      214 Dichtschulter / Dichtkonus
      215 Spalt
      Adapterkopfinnenraum
   23 Signalleitung
   24 Hochtemperatur-Drucksensor (Zylinderdrucksensor, ungekühlt) 240 Membran
L Längsachse
A brennraumfernes Ende
B brennraumnahes Ende
t Abstand zwischen einem zentralen Punkt in Höhe der Längsachse L auf der Aussenfläche der Stirnwand 211 und dem Ende der Glühkerzenbohrung 11

## Patentansprüche

1. Glühkerzenadapter (2) zur Druckmessung in einem Brennraum (1) eines Verbrennungsmotors, umfassend einen Adapterkopf (21), in welchem ein Drucksensor (24) mit einer Membran (240) gelagert ist, und umfassend eine Adapterhülse (20), die am Adapterkopf (21) befestigt ist, wobei der Glühkerzenadapter (2) eine Dichtschulter (214) aufweisend druckdicht in eine Glühkerzenbohrung (11) in einer Brennraumwand (10) einschraubbar ist und Signalleitungen (23) vom Drucksensor (24) durch die Adapterhülse (20) aus dem Glühkerzenadapter (2) herausgeführt sind,
**dadurch gekennzeichnet,**
**dass** der Glühkerzenadapter (2) spitzenfrei ausgestaltet ist ohne ein am Adapterkopf (21) befestigtes Element, welches vom brennraumnahen Ende (B) des Glühkerzenadapters (2) weg ragt,
**dass** der Adapterkopf (21) am brennraumnahen Ende (B) verjüngt ausgestaltet ist und im Adapterkopf (21) im Bereich des brennraumnahen Endes (B) eine Kavität (210) derart eingeformt ist, dass die Kavität (210) auf der dem brennraumfernen Ende (A) zugewandten Seite mit der Membran (240) des eingelagerten Drucksensors (24) abgeschlossen ist,
**dass** die Kavität (210) auf der dem brennraumnahen Ende (B) zugewandten Seite mit einer geschlossenen Stirnwand (211) des Adapterkopfes (21) geschlossen ist
und in den Seitenwänden (212) des Adapterkopfes (21) mehrere Gaswechselkanäle (213) eingeformt sind, welche in die Kavität (210) führen
und **dass** die Fronthöhe (l) der Kavität (210), zwischen der durch die Membran (240) abgeschlossenen Fläche bis zur Aussenfläche der Stirnwand (211) kleiner als ein Adapterdurchmesser (D) des Adapterkopfes (21) im Bereich der Kavität (210) ist.

2. Glühkerzenadapter (2) nach Anspruch 1, **wobei** der Adapterkopf (21) einstückig ausgeführt ist.

3. Glühkerzenadapter (2) nach einem der vorhergehenden Ansprüche, **wobei** das brennraumnahe Ende (B) des Adapterkopfes (21) kegelstumpfförmig ausgestaltet ist.

4. Glühkerzenadapter (2) nach einem der vorhergehenden Ansprüche, **wobei** drei Gaswechselkanäle (213) durch die Seitenwände (212) des Adapterkopfes (21) in die Kavität (210) führend angeordnet sind.

5. Glühkerzenadapter nach Anspruch 6, **wobei** die Gaswechselkanäle (213) in Winkeln (α) zwischen 30° und 90°, bevorzugt 60° zur Längsachse (L) verlaufend angeordnet sind.

6. Glühkerzenadapter nach einem der vorhergehenden Ansprüche, welcher druckdicht in einer Glühkerzenbohrung (11) in der Brennraumwand (10) angeordnet ist, **wobei**
der Glühkerzenadapter (2) derart in der Glühkerzenbohrung (11) zurückversetzt angeordnet ist, dass der Adapterkopf (21) vollständig in der Glühkerzenbohrung (11) liegt und ein Abstand (t) zwischen einem zentralen Punkt in Höhe der Längsachse (L) auf der Aussenfläche der Stirnwand (211) und dem Ende der Glühkerzenbohrung (11) grösser gleich Null ist.

7. Glühkerzenadapter angeordnet gemäss Anspruch 6, wobei der Abstand (t) zwischen der Aussenfläche der Stirnwand (211) des Adapterkopfes (21) und dem Brennraum (1) kleiner gleich 10 mm ist.

8. Glühkerzenadapter angeordnet gemäss einem der vorhergehenden Ansprüche 6 bis 7, wobei das Spaltmass zwischen den Seitenwänden (212) des Adapterkopfes (21) und der Innenwand der Glühkerzenbohrung (11) höchstens 0.05 mm beträgt.

## Claims

1. A glow-plug adaptor (2) for the measurement of pressures in a combustion chamber (1) of an internal combustion engine comprising an adaptor head (21) in which is inserted a pressure sensor (24) having a diaphragm (240), and comprising an adaptor sleeve (20) secured to said adaptor head (21) wherein said glow-plug adaptor (2) comprises a sealing shoulder (214) and is screwable in a pressure-tight manner into a glow plug bore (11) in a combustion chamber wall (10) and signal leads (23) are led from the pressure sensor (24) through said adaptor sleeve (20) out of the glow-plug adaptor (2),
**characterized in that**
said glow-plug adaptor (2) is formed without a tip and without an element fastened to the adaptor head (21) that would extend away from the end (B) located close to the combustion chamber of the glow-plug adaptor (2),
said adaptor head (21) is provided with a tapered shape at its end (B) located close to the combustion chamber and a cavity (210) is formed in the adaptor head (21) in the area of the end (B) located close to the combustion chamber in such a way that the cavity (210), on its side facing the end (A) located remote from the combustion chamber, is sealed by the diaphragm (240) of the inserted pressure sensor (24),
said cavity (210), on its side facing the end (B) close to the combustion chamber, is sealed by a closed end wall (211) of the adaptor head (21),
and in the side walls (212) of the adaptor head (21) are formed a plurality of gas-exchange ducts (213) leading into the cavity (210),
and **in that** the front height (1) of the cavity (210) between the face sealed by the diaphragm (240) up to the outer surface of the end wall (211) is smaller than an adaptor diameter (D) of the adaptor head (21) in the area of the cavity (210).

2. The glow-plug adaptor (2) according to claim 1 **wherein** the adaptor head (21) is formed in one piece.

3. The glow-plug adaptor (2) according to any of the preceding claims **wherein** the end (B) close to the combustion chamber of the adaptor head (21) is frusto-conical in shape.

4. The glow-plug adaptor (2) according to any of the preceding claims **wherein** three gas exchange ducts (213) are provided leading through the side walls (212) of the adaptor head (21) into the cavity.

5. The glow-plug adaptor according to claim 6 **wherein** the gas exchange ducts (213) are arranged extending at angles (α) of between 30° and 90°, preferably of 60° with respect to the longitudinal axis (L).

6. The glow-plug adaptor according to any of the preceding claims inserted in a pressure-tight manner in a glow plug bore (11) in the combustion chamber wall (10) **wherein** said glow plug adaptor (2) is recessed in the glow-plug bore (11) so that the adaptor head (21) is accommodated completely within the glow-plug bore (11) and a distance (t) between a central point at the level of the longitudinal axis (L) on the external surface of the end face (211) and the end of the glow plug bore (11) is greater than zero.

7. The glow-plug adaptor inserted according to claim 6, wherein the distance (t) between the external surface of the end face (211) of the adaptor head (21) and the combustion chamber (1) is less than or equal to 10 mm.

8. The glow-plug adaptor inserted according to any of the preceding claims 6 to 7, wherein the size of the gap between the side walls (212) of the adaptor head (21) and the inner wall of the glow plug bore (11) is no more than 0.05 mm.

## Revendications

1. Adaptateur pour bougie de préchauffage (2) servant à la mesure de la pression dans une chambre de combustion (1) d'un moteur à combustion interne comprenant une tête d'adaptateur (21) dans laquelle est logé un capteur de pression (24) ayant une membrane (240), et comprenant un manchon d'adaptateur (20) fixé à ladite tête d'adaptateur (21), l'adaptateur pour bougie de préchauffage (2) comportant un épaulement d'étanchéité (241) étant vissable de manière étanche à la pression dans un alésage pour bougie de préchauffage (11) dans une paroi de la chambre de combustion (10) et des lignes de signaux (23) étant guidées depuis le capteur de pression (24) à travers le manchon d'adaptateur (20) hors de l'adaptateur pour bougie de préchauffage (2),
**caractérisé en ce que**
ledit adaptateur pour bougie de préchauffage (2) est réalisé sans pointe et sans élément fixé à la tête d'adaptateur (21) s'étendant depuis l'extrémité (B) proche de la chambre de combustion de l'adaptateur pour bougie de préchauffage (2),
que la tête d'adaptateur (21) à l'extrémité (B) proche de la chambre de combustion est configurée en forme effilée et dans la tête d'adaptateur (21) au niveau de l'extrémité (B) proche de la chambre de combustion est formée une cavité (210) de telle manière que la cavité (210) sur son côté en face de l'extrémité (A) loin de la chambre de combustion est scellée par la membrane (240) du capteur de pression (24) inséré,
que la cavité (210) sur son côté en face de l'extrémité (B) proche de la chambre de combustion est scellée par une paroi frontale (211) fermée de la tête d'adaptateur (21)
et **en ce que** dans les parois latérales (212) de la tête d'adaptateur (21) sont ménagés plusieurs canaux d'échange de gaz (213) conduisant à la cavité (210),
et **en ce que** la hauteur frontale (1) de la cavité (210) entre la face scellée par la membrane (240) jusqu'à la surface externe de la paroi frontale (211) est inférieure à un diamètre d'adaptateur (D) de la tête d'adaptateur (21) au niveau de la cavité (210).

2. Adaptateur pour bougie de préchauffage (2) selon la revendication 1 **dans lequel** ladite tête d'adaptateur (21) est réalisée d'un seul tenant.

3. Adaptateur pour bougie de préchauffage (2) selon l'une quelconque des revendications précédentes **dans lequel** l'extrémité (B) proche de la chambre de combustion de la tête d'adaptateur (21) est réalisée en forme tronconique.

4. Adaptateur pour bougie de préchauffage (2) selon l'une quelconque des revendications précédentes **dans lequel** sont fournis trois canaux d'échange de gaz (213) conduisant dans la cavité à travers des parois latérales (212) de la tête d'adaptateur (21).

5. Adaptateur pour bougie de préchauffage selon la revendication 6 **dans lequel** les canaux d'échange de gaz (213) sont disposés s'étendant à des angles (α) entre 30° and 90°, de préférence de 60° par rapport à l'axe longitudinal (L).

6. Adaptateur pour bougie de préchauffage selon l'une quelconque des revendications précédentes inséré de manière étanche à la pression dans un alésage pour bougie de préchauffage (11) dans la paroi de chambre de combustion (10) **dans lequel**
ledit adaptateur pour bougie de préchauffage (2) est renfoncé dans l'alésage pour bougie de préchauffage (11) de telle manière que la tête d'adaptateur (21) vient se loger entièrement dans l'alésage pour bougie de préchauffage (11) et une distance (t) entre un point central au niveau de l'axe longitudinal (L) sur la surface extérieure de la paroi frontale (211) et l'extrémité de l'alésage pour bougie de préchauffage (11) est supérieure à zéro.

7. Adaptateur pour bougie de préchauffage inséré selon la revendication 6 dans lequel la distance (t) entre la surface extérieure de la paroi frontale (211) de la tête d'adaptateur (21) et la chambre de combustion (1) est inférieure ou égale à 10 mm.

8. Adaptateur pour bougie de préchauffage inséré selon l'une quelconque des revendications précédentes 6 à 7 dans lequel la taille de l'écart entre les parois latérales (212) de la tête d'adaptateur (21) et la paroi interne de l'alésage pour bougie de préchauffage (11) est au plus 0,05 mm.
